# EUROPEAN PATENT SPECIFICATION

(11) **EP 1 534 024 B1**
(45) Date of publication and mention of the grant of the patent: **16.04.2008**
(21) Application number: 03388078.2
(22) Date of filing: 20.11.2003
(51) Int. Cl.: H04Q 7/22, H04M 1/725

(54) **Retrieval of positional data for a location by a mobile station from an information service**
Abfragen einer Mobilstation von Positionsdaten für einen Standort von einem Informationsdienst
Extraction de données de positionement pour une position par une station mobile a partir d'un service d'information

(43) Date of publication of application: 25.05.2005
(73) Proprietor: Sony Ericsson Mobile Communications AB, 221 88 Lund (SE)
(72) Inventor: Jendbro, Magnus, 224 73 Lund (SE); Hansson, Björn, 214 22 Malmö (SE)
(74) Representative: Boesen, Johnny Peder

(56) References cited:
- EP-A- 0 996 305
- EP-A- 1 206 103
- US-A1- 2003 054 833
- US-B1- 6 584 328

## Description

### Technical field of the invention:

This invention relates to a method of retrieving positional data for a location from an information service. The invention moreover relates to a system, a mobile station and an information service for retrieving positional data.

### Description of related art:

Mobile stations, such as mobile telephones, personal digital assistants, etc., have become very popular during the recent years. These mobile stations can be equipped with one or more means for communication with stationary computers or computer servers, for example via the Internet, the mobile communication network, WAP, WLAN, Bluetooth® or IR.

Moreover, information services on computer servers, for example available via the Internet, are well known to provide positional data for a location. These information services comprise route planners, providing information of how to go from one location to another by car or by public transport. Such information services are typically available to users on e.g. a PC connected to the Internet, where a user can indicate the location(s) of interest by typing in data related to the location, by pointing on a map, by choosing in a drop down list, etc. Thereafter, the user might print out the information on paper or he/she might transmit the information retrieved from the information service to a mobile station.

As an alternative to the above, it is well known that a mobile station might retrieve positional data directly from an information service, e.g. via WAP. However, generating a request in a mobile station for retrieval of positional data can be quite cumbersome in that the display of a mobile station typically is relatively small and in that typing via a keyboard or display of a mobile station can be relatively cumbersome. Pointing in a map comprises showing a map in the relatively small display of the mobile station, scrolling the map to the approximate position and thereafter clicking on the exact location, which also typically is quite cumbersome and time consuming.

US 2003/0054833 shows a mobile element having means for determining its own position, e.g. by means of a GPS receiver. The position of the mobile element may be transmitted to a service broadcaster, which may then transmit business data files and associated applications to the mobile element based on the current position of the mobile element. Such applications may be advertisement or information regarding entertainment, hotels, libraries, restaurants, theatres, etc.

EP 1 206 103 discloses a mobile telephone in which a phone book in addition to the usual phone numbers may comprise identifiers of Internet resources providing direct access to e.g. WAP web sites. Thus this disclosure shows a method of getting easy access to an Internet service by means of identifiers stored in a phone book together with telephone numbers.

US 6 584 328 describes a system in which a wireless handset uses a keyword comprising a telephone number to obtain map graphic data corresponding to the keyword from a communication server. The keyword is input to the handset by means of a key circuit and transmitted to the communication server, where a searching program will find the target map graphic data corresponding to the keyword and transmit these data to the wireless handset.

### Summary of the invention:

In a mobile station it is thus a problem in the retrieval of data for a location from an information service, in that it is relatively cumbersome and user unfriendly to generate a request message in the mobile station with data related to the location.

This drawback is overcome, when the generation of a request message in a mobile station comprises selecting a data entity already present in the mobile station for inclusion in the request message, where the data entity comprises explicit data related to the location. When a data entity already present in the mobile station is included in the request message, the request for positional data can be generated quickly and in a user friendly way with only few keystrokes. The information service could for instance be a web service, e.g. an Internet service, e.g. accessed via WAP, GSM, GPRS, or UMTS technology.

According to a preferred embodiment of the method according to the invention, the data entity already present in the mobile station is a phone book entry. Such a phone book entry could be any of or any combination of the following: name, telephone number(s), address(es), city/cities, and state(s) and/or country/countries or any other data relevant for contact. An alternative example of such a data entity is an electronic visiting card, for example the so called vCard, which is an electronic visiting card, i.e. an electronic business or personal card. When the data entity already present in the mobile station is a phone book entry or a vCard, more than one telephone number and/or address might be included therein; in this case, the request could result in positional data for more than one location, e.g. tagged with "person name, work", "person name, home", "person name, summer residence", etc., or any other similar descriptive name.

In yet a further preferred embodiment the method according to the invention further comprises the step of retrieving the actual position of the mobile station by means of a satellite navigation system receiver comprised in the mobile station, where the satellite navigation system could be GPS (Global Positioning System), GLONASS (Global Orbiting Navigation Satellite System), GNSS (Global Navigation Satellite Systems)/Galileo or any future satellite navigation systems. Hereby, the actual position of the mobile station can be determined and compared to the positional data for the location.

According to a further preferred embodiment, the method further comprises the step of using the positional data transmitted to the mobile station together with any existing positioning application present in the mobile station. Such positioning applications present in the mobile station might provide directions on how to get from the actual position of the mobile station to the location, the travelling time, etc. If the retrieval of positional data has resulted in positional data for a plurality of locations related to the data entity included in the request message, the positional application in the mobile station could provide directions to each of the locations. Alternatively, the positional application in the mobile station could be arranged to prompt the user to indicate which of the locations, he/she wants directions for.

In yet a preferred embodiment, the positional data in the method according to the invention is geographical coordinates of the location. Such geographical coordinates could be longitude and latitude of the location or any other unambiguous coordinates of the invention. Hereby, the positional data are precise and unambiguous. Moreover, the positional data can be used in any application in the mobile station supporting use of the geographical coordinates of the location, e.g. latitude and longitude. Preferably, the mobile station is a mobile telephone or a Personal Digital Assistant.

In yet a preferred embodiment, the step of providing the positional data in the information service comprises using only sufficient data out of the explicit data to provide positional data. Hereby, the information service handles the choice of which data to use, so that the user, who generates the request message, does not have to bother about which data he should send. Instead he only selects a data entity already present in the phone and includes it in his request message. In the case, where the data entity comprises a plurality of phone numbers and/or addresses, e.g. address of the home and work place of a person and/or the phone number at home, at work and one or more mobile telephone numbers, the information service preferably provides positional data for all the different locations. However, the user might indicate a preference of behaviour in the request, so that positional data for a preferred location is given by the information service.

Preferably, the information service uses a predetermined hierarchy of importance of data in the explicit data to provide positional data. This prevents problems regarding providing unambiguous positional data in the case that different combinations of the explicit data in a request message would provide data of different locations, e.g. if a person for which positional data are requested has moved to another address, but has kept his telephone number unchanged, while the address has not been updated in the data entity in the user's mobile station. Moreover, if the data entity is ambiguous the information service could be programmed to provide positional data for the different positions ambiguously indicated or a subset of these in the data entity, so that a user subsequently can choose which one to use.

Preferably, the mobile station is a mobile telephone or a Personal Digital Assistant.

When the step of transmitting the request message to the information service is performed over a mobile telephone network, a particular easy implementation of the method is achieved, in that the method makes use of already existing elements. Moreover, the step of transmitting the positional data from the information service to the mobile station preferably is performed over a mobile telephone network. The transmittal of positional data from the information service to the mobile station could e.g. be performed via SMS or WAP, GSM, UMTS or GPRS. The fact that the use of a mobile telephone network is mentioned does not exclude the use of other communication means. Typically, a gateway and a network are also included in the communication between a mobile station and an information service located at a computer server. Alternatively or additionally, local communication means could be used, such as infrared communication or Bluetooth®.

The invention moreover relates to a system for retrieving positional data for a location from an information service the system comprising means for generating a request message, in the mobile station, comprising explicit data related to the location; means for transmitting the request message to the information service; means for providing the positional data, in the information service, based on the explicit data in the request message; means for transmitting the positional data from the information service to the mobile station; and is characterized in that the request message generated in the mobile station comprises a data entity, which was stored in the mobile station prior to generation of the request message for another purpose than retrieval of positional data from an information service, and which data entity comprises the explicit data.

The invention further relates to a mobile station for retrieving positional data for a location from an information service, the mobile station comprising: means for generating a request message comprising explicit data related to the location; means for transmitting the request message to the information service; means for receiving the positional data from the information service to the mobile station; which mobile station is characterized in further comprising a data entity stored in the mobile station for another purpose than retrieval of positional data from an information service, which data entity is included in the request message and which data entity comprises the explicit data. Preferably, the mobile station according to the invention comprises a satellite navigation system receiver, e.g. a GPS, GLONASS or GNSS/Galileo receiver.

Further, the invention relates to an information service for retrieving positional data for a location, which information service comprises: means for receiving a request message from a mobile station, the request message comprising explicit data related to the location; means for providing the positional data based on the explicit data in the request message; means for transmitting the positional data to the mobile station; which information service comprises means for extracting the explicit data from the request message for the generation of the positional data, which explicit data are comprised in a data entity sent from the mobile station. It should be understood, that the expression "retrieving positional data for a location" is not meant to exclude the simultaneous provision of positional data for more than one location. In the case where the data entity sent from the mobile station is a phone book entry or a vCard containing more than one phone number and/or more than one address, positional data for each of the appropriation locations related to the information in the phone book entry or vCard can thus be retrieved simultaneously and by the generation of only one request message in the mobile station.

Preferably, the information service according to the invention resides on a computer server accessible via a computer network, and yet preferably the information service has access to one or more databases for retrieval of positional data for a location. The information service according to the invention might use a predetermined hierarchy of importance of data in the explicit data to provide the positional data.

Finally, the invention relates to a method of, in an information service, handling a request for positional data for a location, said request comprising explicit data related to the location, the method comprising the steps of: receiving, from an mobile station, a request message comprising explicit data related to the location; providing the positional data based on the explicit data in the request message; sending the positional data to the mobile station; where the step of providing positional data includes extracting the explicit data from the request message for the generation of the positional data, which explicit data are comprised in a data entity sent from the mobile station. When the data entity sent from the mobile station comprises explicit data for more than one location, the information service typically provides positional data for 1) one location, or 2) some locations or 3) all locations. Those might be effected by user preferred service level or alike. Alternatively, the information service might prompt the user, via a message sent to the mobile station, to choose the location for which the positional data are requested. The data entity could for instance comprise explicit data for more than one location in the cases where the data entity sent from the mobile station is a phone book entry, e.g. relating to a contact person and indicating his/her different phone numbers at work, at home, mobile telephone number and/or any other phone numbers, or when the data entity is a vCard, which also can contain a plurality of phone numbers and/or addresses.

Preferably, the step of providing positional data includes using a predetermined hierarchy of importance of data in the explicit data. In a preferred embodiment, the method further comprises the step of accessing one or more database for the retrieval of positional data for a location.

It should be emphasised that the term "comprising/comprises" when used in this specification is taken to specify the presence of stated features, integers, steps or components but does not preclude the presence or addition of one or more other features, integers, steps, components or groups thereof.

The term "mobile station" is meant to include any equipment such as mobile telephones, cellular telephones, radio telephones, pagers, communicators, i.e. electronic organizers, smart phones, PDAs or the like.

The term "explicit data" is meant to cover person or company related data such as address info (business, home, mailing, parcel), telephone numbers (home, business, fax, pager, cellular, ISDN, voice, data, video), email addresses and Internet URLs. Such data are typically related to one or more locations, e.g. home and work place of a person or addresses of different branch offices of a company. Moreover, the combination of several data fields in the explicit data can yield positional data for one or more locations. For instance, the explicit data could be only the name of a person and the name of a small village, e.g. "Andreas Smith", "South Village" without the complete address; these data could be combined to retrieve the positional data of the location of the hopefully only person in the small village.

### Brief description of the drawings:

The invention will be described more fully below in connection with preferred embodiments and with reference to the drawings, in which:
Fig. 1 shows the general concept of retrieval of data from an information service via a mobile station; and
Fig. 2 is a diagram showing a system for retrieving positional data for a location from an information service according to an embodiment of the invention.

Throughout the drawings, the same reference numerals indicate similar or corresponding features, functions, etc.

### Detailed description of embodiments:

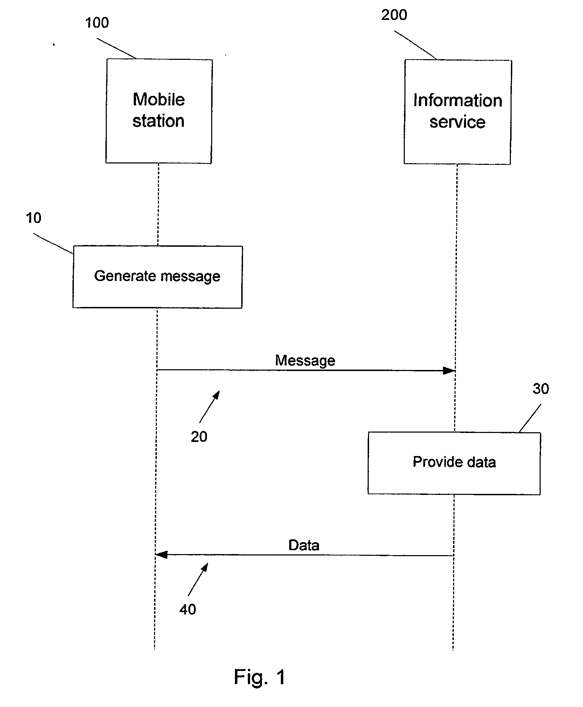

Fig. 1 shows the general concept of retrieval of data from an information service 200 via a mobile station 100. In fig. 1, components are represented by squares, activities taking place in a component are represented by rectangles and communication between components is represented as lines. This concept includes the step 10 of generating a request message in the mobile station 100, which message is transmitted, in step 20, to an information service 200. The message 100 can contain a request for data in general, of course typically data which the information service should be able to supply. The information service 200 thereafter handles, step 30, the message to provide data, e.g. by (a) data base look up(s). Subsequently, the information service 200 transmits, step 40, the data provided as a result of the request message sent from the mobile station 100. This concept is a generalization of any information retrieval performed via a mobile station 100 and an information service 200. The mobile station 100 could be a mobile telephone, a pager, an electronic organizer, a smartphone, etc. The information service 200 could be resident on a server accessible via the Internet, where the mobile station 100 might communicate with the Internet via a mobile network and a gateway.

The methods of the invention takes place in steps 10 and 30 in fig. 1. According to the invention step 10 of fig. 1, viz. the generation of a message, comprises selecting a data entity already present in the mobile station for inclusion in the request message, which data entity comprises explicit data related to the location(s) for which positional data are requested. In one preferred embodiment the mobile station is a mobile telephone and the data entity already present in the mobile telephone is a phone book entry. The explicit data in such a phone book entry could be a name and telephone number(s) of a person, which typically is enough information to unambiguously finding one or more locations related to the person. Another example could be the name and telephone number of a company. Alternatively, the data entity already present in the mobile telephone could be a so-called vCard, which is an electronic business or personal card. The explicit data in a vCard can be one or more of the following: name, address info (business, home, mailing, parcel), telephone numbers (home, business, fax, pager, cellular, ISDN, voice, data, video), email addresses and Internet URLs (Universal Resource Locators). If the explicit data contains more than one telephone number, e.g. telephone number at home and/or at work and/or one or more mobile telephone numbers, these different telephone numbers typically are related to different addresses. In this case, the request inherently is a request for a plurality of different locations related to this plurality of different addresses, and the retrieved positional data could include a plurality of positional data, e.g. tagged with "person name, work", "person name, home", "person name, summer residence" or tagged with the city names in case of a request for positional data for the branch offices of a company with a plurality of branch offices.

The vCard can have been transferred originally to the mobile telephone via any appropriate communication means, such as via infrared links or Bluetooth®, via a mobile telephone network or via the Internet's World-Wide-Web. Alternatively, any phone book entry might originally have been input to the mobile telephone by a user manually keying it in or it might have been transferred to the mobile telephone in any other way.

A user wishing to get positional data for a person or company for who/which he has phone book entry or a vCard, thus can generate a request message and can include the phone book entry or the vCard instead of having to key in the name, phone number, etc. of the person/company. Hereby a quick and user friendly method of retrieving positional data is obtained. The retrieved information can be directly stored in the entity and returned (as e.g. an updated vCard).

Preferably, the mobile telephone has a functionality or application apt to requesting positional data, such as a program resident on the mobile station. For instance, the user could enter a program "Generate request message" on the mobile station, preferably by only one or very few keystrokes. Next, the program could prompt the user to include the data entity and preferably open the file systems of visiting cards and/or phone book, so that the user could select the appropriate data entity to be included in the request message. Finally, the user sends the request message to the information service; again this step might be performed via one or very few key strokes. Subsequently, the information service sends information as positional data to the mobile telephone. This positional data is preferably geographical coordinates of the location(s), e.g. longitude and latitude or similar geographical coordinates of the location(s). If the mobile telephone comprises a satellite navigation system receiver, e.g. GPS, GLONASS and/or GNSS/Galileo receiver, the positional data in the form of the geographical coordinates of the location, e.g. longitude and latitude, can be directly used in the functionalities of the satellite navigation system receiver. For instance, the satellite navigation system receiver can compare the actual position of the mobile telephone with the positional data related to a certain location and generate directions of how to go to the certain location from the actual position, the time it'll take to go there, maps of the vicinity of the certain location and/or the actual position of the mobile telephone, etc.

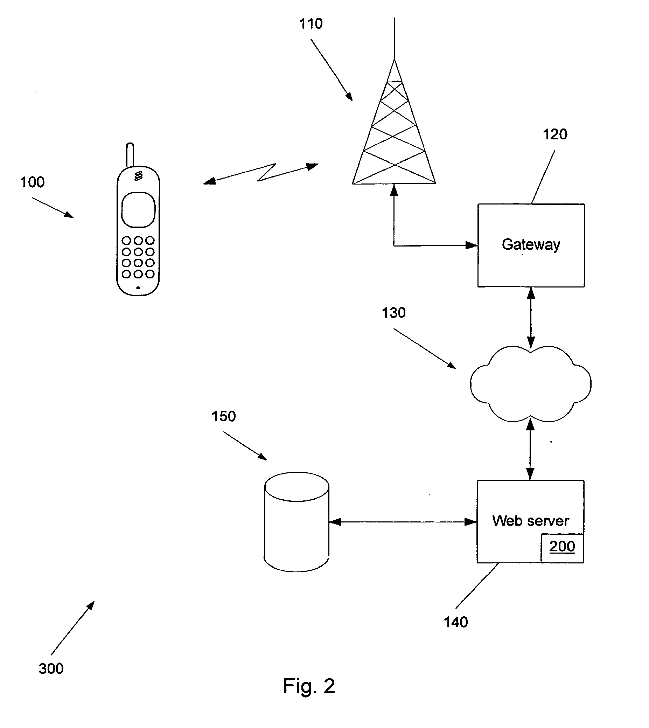

Fig. 2 is a diagram showing a system 300 for retrieving positional data for a location from an information service 200 according to an embodiment of the invention. The system 300 includes a mobile telephone 100, a mobile telephone network 110 in communication with a computer network 130, such as the Internet, via a gateway 120. Moreover, the system 300 includes a web server 140 coupled to the computer network 130. Finally, the system includes one or more databases 150 accessible via the web server, and an information service 200 residing in the web server 140. It should be noted that the information service 200 might reside in more servers and is only shown as one information service for the sake of clarity. The system provides the possibility that a user of the mobile telephone 100 retrieves information from the database 150 via a mobile telephone network. As mentioned above, the mobile station 100 might comprise a satellite navigation system receiver as a built-in functionality or application in the mobile telephone. Hereby, a user can utilize the system for retrieval of a positional data from a database in the form of geographical coordinates of the location, e.g. latitude and longitude, and thereafter use the retrieved geographical coordinates in the functionalities of the satellite navigation system receiver, such as directions on how to get from the actual position of the mobile station to the location corresponding to the positional data, the travelling time, maps, etc.

## Claims

1. A method of retrieving positional data for a location specified by a moblie station (100) from an information service (200), the method comprising the steps of:
generating (10), in the mobile station (100), a request message comprising explicit data related to the location for which positional data should be retrieved;
transmitting (20) the request message to the information service (200);
providing the positional data, in the information service (200), based on the explicit data in the request message;
transmitting the positional data from the information service (200) to the mobile station (100);
**characterized in that**:
the step of generating the request message in the mobile station (100) comprises selecting, when positional data for a location related to a phone book entry or an electronic business card already present in the mobile station are requested, explicit data comprised in said phone book entry or electronic business card for inclusion in the request message.

2. A method according to claim 1, the method further comprising the step of:
retrieving the actual position of the mobile station (100) by means of a satellite navigation system receiver comprised in the mobile station (100).

3. A method according to any of the claims 1 or 2, the method further comprising the step of:
using the positional data transmitted to the mobile station (100) together with any existing positioning application present in the mobile station (100).

4. A method according to any of the claims 1 to 3, wherein the positional data are geographical coordinates of the location.

5. A method according to any of the claims 1 to 4, wherein the step of providing the positional data in the information service (200), comprises:
only using sufficient data out of the explicit data to provide the positional data.

6. A method according to claim 5, wherein the information service (200) uses a predetermined hierarchy of importance of data in the explicit data to provide the positional data.

7. A method according to any of the claims 1 to 6, wherein the mobile station (200) is a mobile telephone or a Personal Digital Assistant.

8. A method according to any of the claims 1 to 7, wherein the step of transmitting the request message to the information service (200) is performed over a mobile telephone network (110).

9. A method according to any of the claims 1 to 8, wherein the step of transmitting the positional data from the information service (200) to the mobile station (100) is performed over a mobile telephone network (110).

10. A system for retrieving positional data for a location specified by a mobile station (100) from an information service (200), the system comprising:
means for generating a request message, in the mobile station (100), comprising explicit data related to the location for which positional data should be retrieved;
means for transmitting the request message to the information service (200);
means for providing the positional data, in the information service (200), based on the explicit data in the request message;
means for transmitting the positional data from the information service (200) to the mobile station (100);
**characterized in that**:
said means for generating a request message in the mobile station (100) is arranged to include, when positional data are requested for a location related to a phone book entry or an electronic business card already stored in the mobile station prior to generation of the request message for another purpose than retrieval of positional data from an information service (200), explicit data comprised in said phone book entry or electronic business card in the request message.

11. A mobile station (100) for retrieving positional data for a location specified by the mobile station from an information service (200), the mobile station (100) comprising:
means for generating a request message comprising explicit data related to the location for which positional data should be retrieved;
means for transmitting the request message to the information service
means for receiving the positional data from the information service to the mobile station,
**characterized in that**:
said means for generating a request message is arranged to include, when positional data are requested for a location related to a phone book entry or an electronic business card already stored in the mobile station prior to generation of the request message for another purpose than retrieval of positional data from an information service (200), explicit data comprised in said phone book entry or electronic business card in the request message.

12. A mobile station according to claim 11, **characterized in that** the mobile station (100) moreover comprises a satellite navigation system receiver.

13. An information server for retrieving positional data for a location, which information server comprises:
means for receiving a request message from a mobile station (100), the request message comprising explicit data related to the location;
means for providing the positional data based on the explicit data in the request message;
means for transmitting the positional data to the mobile station (100);
**characterized in that**:
the information server is further arranged to extract from said explicit data of the request message received from the mobile station (100) data sufficient for providing the positional data.

14. An information server according to claim 13, **characterized in that** the information service (200) resides on a computer server (140) accessible via a computer network (130).

15. An information server according to claim 13 or 14, **characterized in that** the information service (200) has access to one or more database (150) for retrieval of positional data for a location.

16. An information server according to any of the claims 13 to 15, **characterized in that** the information service (200) uses a predetermined hierarchy of importance of data in the explicit data to provide the positional data.

17. A method of, in an information service (200), handling a request for positional data for a location, said request comprising explicit data related to the location, the method comprising the steps of:
receiving, from an mobile station (100), a request message comprising explicit data related to the location;
providing the positional data based on the explicit data in the request message;
sending the positional data to the mobile station (100);
**characterized in that**:
the step of providing positional data includes extracting from said explicit data of the request message received from the mobile station (100) data sufficient for providing the positional data.

18. A method according to claim 17, **characterized in that** the step of providing positional data includes using a predetermined hierarchy of importance of data in the explicit data.

19. A method according to claim 17 or 18, **characterized in that** method further comprises the step of:
accessing one or more databases (150) for the retrieval of positional data for a location.

## Patentansprüche

1. Verfahren eines Abrufens von Positionsdaten für einen Ort, der durch eine Mobilstation (100) spezifiziert ist, von einem Informationsdienst (200), wobei das Verfahren die Schritte umfasst:
Erzeugen (10) in der Mobilstation (100) einer Anforderungsnachricht mit expliziten Daten, die sich auf den Ort beziehen, für den Positionsdaten abgerufen werden sollten;
Übertragen (20) der Anforderungsnachricht an den Informationsdienst (200);
Bereitstellen der Positionsdaten in dem Informationsdienst (200) basierend auf expliziten Daten in der Anforderungsnachricht;
Übertragen der Positionsdaten von dem Informationsdienst (200) zu der Mobilstation (100);
**dadurch gekennzeichnet, dass**
der Schritt eines Erzeugens der Anforderungsnachricht in der Mobilstation (100) ein Auswählen von expliziten Daten zum Einschluss in der Anforderungsnachricht umfasst, wenn Positionsdaten für einen Ort angefordert werden, der sich auf einen Telefonbucheintrag oder eine elektronische Geschäftskarte bezieht, die bereits in der Mobilstation vorliegen, die in dem Telefonbucheintrag oder der elektronischen Geschäftskarte umfasst sind.

2. Verfahren nach Anspruch 1, wobei das Verfahren weiter den Schritt umfasst:
Abrufen der tatsächlichen Position der Mobilstation (100) mittels eines Satellitennavigationssystem-Empfängers, der in der Mobilstation (100) umfasst ist.

3. Verfahren nach einem der Ansprüche 1 oder 2, wobei das Verfahren weiter den Schritt umfasst:
Verwenden der Positionsdaten, die an die Mobilstation (100) übertragen werden, zusammen mit irgendeiner existierenden Positionsanwendung, die in der Mobilstation (100) vorliegt.

4. Verfahren nach einem der Ansprüche 1 bis 3, wobei die Positionsdaten geographische Koordinaten des Ortes sind.

5. Verfahren nach einem der Ansprüche 1 bis 4, wobei der Schritt eines Bereitstellens der Positionsdaten in dem Informationsdienst (200) umfasst:
Ausschließliches Verwenden ausreichender Daten aus den expliziten Daten, um die Positionsdaten bereitzustellen.

6. Verfahren nach Anspruch 5, wobei der Informationsdienst (200) eine vorbestimmte Hierarchie der Wichtigkeit der Daten in den expliziten Daten verwendet, um die Positionsdaten bereitzustellen.

7. Verfahren nach einem der Ansprüche 1 bis 6, wobei die Mobilstation (200) ein Mobiltelefon oder ein persönlicher, digitaler Assistent ist.

8. Verfahren nach einem der Ansprüche 1 bis 7, wobei der Schritt eines Übertragens der Anforderungsnachricht an den Informationsdienst über ein Mobiltelefonnetzwerk (110) durchgeführt wird.

9. Verfahren nach einem der Ansprüche 1 bis 8, wobei der Schritt eines Übertragens der Positionsdaten von dem Informationsdienst (200) zu der Mobilstation über ein Mobilstelefonnetzwerk (110) durchgeführt wird.

10. System zum Abrufen von Positionsdaten für einen Ort, der durch eine Mobilstation (100) spezifiziert ist, von einem Informationsdienst (200), wobei das System umfasst:
eine Vorrichtung zum Erzeugen in der Mobilstation einer Anforderungsnachricht mit expliziten Daten, die sich auf den Ort beziehen, für den Positionsdaten abgerufen werden sollten;
eine Vorrichtung zum Übertragen der Anforderungsnachricht an den Informationsdienst (200);
eine Vorrichtung zum Bereitstellen der Positionsdaten in dem Informationsdienst (200) basierend auf expliziten Daten in der Anforderungsnachricht;
eine Vorrichtung zum Übertragen der Positionsdaten von dem Informationsdienst (200) zu der Mobilstation;
**dadurch gekennzeichnet, dass**
die Vorrichtung zum Erzeugen der Anforderungsnachricht in der Mobilstation (100) angeordnet ist, explizite Daten in der Anforderungsnachricht einzuschließen, wenn Positionsdaten für einen Ort angefordert werden, der sich auf einen Telefonbucheintrag oder eine elektronische Geschäftskarte bezieht, die bereits in der Mobilstation vor einer Erzeugung der Anforderungsnachricht für einen anderen Zweck als einen Abruf von Positionsdaten von einem Informationsdienst (200) gespeichert sind, die in dem Telefonbucheintrag oder der elektronischen Geschäftskarte umfasst sind.

11. Mobilstation (100) zum Abrufen von Positionsdaten für einen Ort, der durch eine Mobilstation (100) spezifiziert ist, von einem Informationsdienst (200), wobei die Mobilstation umfasst:
eine Vorrichtung zum Erzeugen in der Mobilstation (100) einer Anforderungsnachricht mit expliziten Daten, die sich auf den Ort beziehen, für den Positionsdaten abgerufen werden sollten;
eine Vorrichtung zum Übertragen der Anforderungsnachricht an den Informationsdienst;
eine Vorrichtung zum Empfangen der Positionsdaten von dem Informationsdienst an der Mobilstation
**dadurch gekennzeichnet, dass**
die Vorrichtung zum Erzeugen der Anforderungsnachricht in der Mobilstation (100) angeordnet ist, explizite Daten in der Anforderungsnachricht einzuschließen, wenn Positionsdaten für einen Ort angefordert werden, der sich auf einen Telefonbucheintrag oder eine elektronische Geschäftskarte bezieht, die bereits in der Mobilstation vor einer Erzeugung der Anforderungsnachricht für einen anderen Zweck als einen Abruf von Positionsdaten von einem Informationsdienst (200) gespeichert sind, die in dem Telefonbucheintrag oder der elektronischen Geschäftskarte umfasst sind.

12. Mobilstation nach Anspruch 11, **dadurch gekennzeichnet, dass** die Mobilstation (100) darüber hinaus einen Satellitennavigationssystemempfänger umfasst.

13. Informationsserver zum Abrufen von Positionsdaten für einen Ort, wobei der Informationsserver umfasst:
eine Vorrichtung zum Empfangen einer Anforderungsnachricht von einer Mobilstation (100), wobei die Anforderungsnachricht explizite Daten umfasst, die sich auf den Ort beziehen;
eine Vorrichtung zum Bereitstellen der Positionsdaten basierend auf den expliziten Daten in der Anforderungsnachricht;
eine Vorrichtung zum Übertragen der Positionsdaten zu der Mobilstation (100);
**dadurch gekennzeichnet, dass**
der Informationsserver weiter angeordnet ist, aus den expliziten Daten der Anforderungsnachricht, die von der Mobilstation (100) empfangen wird, Daten zu extrahieren, die ausreichend zum Bereitstellen der Positionsdaten sind.

14. Informationsserver nach Anspruch 13, **dadurch gekennzeichnet, dass** der Informationsdienst (200) einem Computer-Server (140) innewohnt, der über ein Computernetzwerk (130) zugreifbar ist.

15. Informationsserver nach Anspruch 13 oder 14, **dadurch gekennzeichnet, dass** der Informationsdienst (200) einen Zugriff auf eine oder mehrere Datenbanken (150) zum Abruf von Positionsdaten für einen Ort aufweist.

16. Informationsserver nach einem der Ansprüche 13 bis 15, **dadurch gekennzeichnet, dass** der Informationsdienst (200) eine vorbestimmte Hierarchie der Wichtigkeit von Daten in den expliziten Daten verwendet, um die Positionsdaten bereitzustellen.

17. Verfahren eines Handhabens in einem Informationsdienst (200) einer Anforderung für Positionsdaten für einen Ort, wobei die Anforderung explizite Daten umfasst, die sich auf den Ort beziehen, wobei das Verfahren umfasst:
Empfangen von einer Mobilstation (100) einer Anforderungsnachricht mit expliziten Daten, die sich auf den Ort beziehen;
Bereitstellen der Positionsdaten basierend auf den expliziten Daten in der Anforderungsnachricht;
Senden der Positionsdaten zu der Mobilstation (100);
**dadurch gekennzeichnet, dass**
der Schritt eines Bereitstellens von Positionsdaten ein Extrahieren von Daten aus den expliziten Daten der Anforderungsnachricht umfasst, die von der Mobilstation (100) empfangen wird, die ausreichend zum Bereitstellen der Positionsdaten sind.

18. Verfahren nach Anspruch 17, **dadurch gekennzeichnet, dass** der Schritt eines Bereitstellens der Positionsdaten ein Verwenden einer vorbestimmten Hierarchie der Wichtigkeit der Daten in den expliziten Daten umfasst.

19. Verfahren nach Anspruch 17 oder 18, **dadurch gekennzeichnet, dass** das Verfahren weiter den Schritt umfasst:
Zugreifen auf eine oder mehrere Datenbanken (150) für den Abruf von Positionsdaten für einen Ort.

## Revendications

1. Procédé d'obtention de données de positionnement pour une position spécifiée par une station mobile (100), à partir d'un service d'information (200), le procédé comprenant les étapes consistant à :
produire (10) sur la station mobile (100) un message de demande comprenant des données explicites liées à la position pour laquelle des données de positionnement doivent être obtenues ;
émettre (20) le message de demande vers le service d'information (200) ;
dans le service d'information (200), fournir les données de positionnement sur la base des données explicites dans le message de demande ;
émettre les données de positionnement à partir du service d'information (200) vers la station mobile (100) ;
**caractérisé en ce que** :
l'étape de production du message de demande dans la station mobile (100) comprend, lorsque des données de positionnement sont demandées pour une position liée à un enregistrement d'un annuaire téléphonique ou à une carte de visite professionnelle électronique déjà présent dans la station mobile, la sélection de données explicites comprises dans ledit enregistrement d'un annuaire téléphonique ou dans ladite carte de visite professionnelle électronique, afin de les inclure dans le message de demande.

2. Procédé selon la revendication 1, le procédé comprenant en outre l'étape consistant à :
obtenir la position réelle de la station mobile (100) à l'aide d'un récepteur de système de navigation par satellites compris dans la station mobile (100).

3. Procédé selon l'une quelconque des revendications 1 et 2, le procédé comprenant en outre l'étape consistant à :
utiliser les données de positionnement transmises à la station mobile (100) avec une application de localisation existante quelconque qui est présente dans la station mobile (100).

4. Procédé selon l'une quelconque des revendications 1 à 3, dans lequel les données de positionnement sont des coordonnées géographiques de la position.

5. Procédé selon l'une quelconque des revendications 1 à 4, dans lequel l'étape de fourniture des données de positionnement dans le service d'information (200) comprend l'étape consistant à :
utiliser seulement des données suffisantes parmi les données explicites pour fournir les données de positionnement.

6. Procédé selon la revendication 5, dans lequel le service d'information (200) utilise une hiérarchie prédéterminée d'importance de données dans les données explicites, afin de fournir les données de positionnement.

7. Procédé selon l'une quelconque des revendications 1 à 6, dans lequel la station mobile (200) est un téléphone mobile ou un assistant numérique personnel.

8. Procédé selon l'une quelconque des revendications 1 à 7, dans lequel l'étape d'émission du message de demande vers le service d'information (200) est exécutée via un réseau téléphonique mobile (110).

9. Procédé selon l'une quelconque des revendications 1 à 8, dans lequel l'étape d'émission des données de positionnement entre le service d'information (200) et la station mobile (100) est exécutée via un réseau téléphonique mobile (110).

10. Système destiné à obtenir des données de positionnement pour une position spécifiée par une station mobile (100), à partir d'un service d'information (200), le système comprenant :
un moyen destiné à produire sur la station mobile (100) un message de demande comprenant des données explicites liées à la position pour laquelle des données de positionnement doivent être obtenues ;
un moyen destiné à émettre le message de demande vers le service d'information (200) ;
un moyen destiné à fournir les données de positionnement, dans le service d'information (200), sur la base des données explicites dans le message de demande ;
un moyen destiné à émettre les données de positionnement à partir du service d'information (200) vers la station mobile (100) ;
**caractérisé en ce que** :
ledit moyen de production d'un message de demande dans la station mobile (100) est conçu, lorsque des données de positionnement sont demandées pour une position liée à un enregistrement d'un annuaire téléphonique ou à une carte de visite professionnelle électronique déjà mémorisé dans la station mobile avant la production du message de demande, dans un but autre que d'obtenir des données de positionnement auprès d'un service d'information (200), pour inclure dans le message de demande des données explicites comprises dans ledit enregistrement d'un annuaire téléphonique ou dans ladite carte de visite professionnelle électronique.

11. Station mobile (100) destinée à obtenir des données de positionnement pour une position spécifiée par la station mobile, à partir d'un service d'information (200), la station mobile (100) comprenant :
un moyen destiné à produire un message de demande comprenant des données explicites liées à la position pour laquelle des données de positionnement doivent être obtenues ;
un moyen destiné à émettre le message de demande vers le service d'information ;
un moyen destiné à recevoir les données de positionnement émises du service d'information vers la station mobile ;
**caractérisée en ce que** :
ledit moyen de production d'un message de demande est conçu, lorsque des données de positionnement sont demandées pour une position liée à un enregistrement d'un annuaire téléphonique ou à une carte de visite professionnelle électronique déjà mémorisé dans la station mobile avant la production du message de demande, dans un but autre que d'obtenir des données de positionnement auprès d'un service d'information (200), pour inclure dans le message de demande des données explicites comprises dans ledit enregistrement d'un annuaire téléphonique ou dans ladite carte de visite professionnelle électronique.

12. Station mobile selon la revendication 11, **caractérisée en ce que** la station mobile (100) comprend en outre un récepteur de système de navigation par satellites.

13. Serveur d'informations destiné à obtenir des données de positionnement pour une position, le serveur d'information comprenant :
un moyen destiné à recevoir un message de demande d'une station mobile (100), le message de demande comprenant des données explicites liées à la position ;
un moyen destiné à fournir les données de positionnement sur la base des données explicites dans le message de demande ;
un moyen destiné à émettre les données de positionnement vers la station mobile (100) ;
**caractérisé en ce que** :
le service d'information est en outre agencé pour extraire desdites données explicites du message de demande reçu de la station mobile (100) des données suffisantes pour fournir les données de positionnement.

14. Serveur d'informations selon la revendication 13, **caractérisé en ce que** le service d'information (200) réside sur un serveur informatique (140) accessible via un réseau informatique (130).

15. Serveur d'informations selon la revendication 13 ou 14, **caractérisé en ce que** le service d'information (200) a accès à une ou plusieurs bases de données (150) pour obtenir des données de positionnement pour une position.

16. Serveur d'informations selon l'une quelconque des revendications 13 à 15, **caractérisé en ce que** le service d'information (200) utilise une hiérarchie prédéterminée d'importance de données dans les données explicites, afin de fournir les données de positionnement.

17. Procédé de traitement, dans un service d'information (200), d'une demande de données de positionnement pour une position, ladite demande comprenant des données explicites liées à la position, le procédé comprenant les étapes consistant à :
recevoir d'une station mobile (100) un message de demande comprenant des données explicites liées à la position ;
fournir les données de positionnement sur la base des données explicites dans le message de demande ;
émettre les données de positionnement vers la station mobile (100) ;
**caractérisé en ce que** :
l'étape de fourniture de données de positionnement comprend l'étape consistant à extraire desdites données explicites du message de demande reçu de la station mobile (100) des données suffisantes pour fournir les données de positionnement.

18. Procédé selon la revendication 17, **caractérisé en ce que** l'étape de fourniture des données de positionnement comprend l'utilisation d'une hiérarchie prédéterminée d'importance de données dans les données explicites.

19. Procédé selon la revendication 17 ou 18, **caractérisé en ce que** le procédé comprend en outre l'étape consistant à :
accéder à une ou plusieurs bases de données (150) pour obtenir des données de positionnement pour une position.
